# EUROPEAN PATENT APPLICATION

(11) **EP 4 659 939 A1**
(43) Date of publication of application: **10.12.2025**
(21) Application number: 24382614.6
(22) Date of filing: 06.06.2024
(51) Int. Cl.: B29C 65/14, B29C 65/18, B29C 65/20, B29C 65/32, B29C 65/72, B29C 65/78, B29L 31/00

(54) **PREHEATING OF PLASTIC SPOUTS**

(71) Applicant: SIG Services AG, 8212 Neuhausen am Rheinfall (CH)
(72) Inventor: PIRIS ALBARRAL, José Manuel, 08210 Barberà del Vallès, Barcelona (ES); VAN TUIL, Johannes Wilhelmus, 08210 Barberà del Vallès, Barcelona (ES)
(74) Representative: Kox Grande, Jordi

(57) **Abstract**

A method for producing collapsible pouches having a plastic spout involves a pouch production machine having a spout preheating device, a spout inserting device and a heat-sealing device distinct from the spout preheating device.

The spout preheating device comprises a first and second preheating member (210, 220) for facing a first and second sealing wall (152, 153) of the spout (150). The opposed preheating members (210, 220) may have contoured surfaces matching the respective sealing wall (152, 153) of the spout. Preferably, the preheating members (210, 220) emit radiant heat, such as infrared, and are spaced at a constant distance (D) from the sealing walls (152, 153). Alternatively, the preheating members (210, 220) may contact the sealing walls (152, 153) to heat them via conduction.

After preheating, the spout inserting device inserts the spout (150) into the pouch and are clamped together by jaws of the heat-sealing device.

## Description

The present invention relates to the preheating of plastic spouts in a method for the production of collapsible pouches having a plastic spout. The present invention further relates to a production machine for the production of collapsible pouches having a plastic spout.

Collapsible pouches are known in the art and typically comprise an opposed first foil wall and second foil wall between which an interior of the pouch is defined. These foil walls comprise, e.g. are made of, heat-sealable film material. Throughout the present application, both the terms foil walls and pouch walls are used, which both refer to the same walls of heat-sealable film material.

A plastic spout is locally heat-sealed in between the foil walls to provide for a fluid passage. Such spouts generally comprise an attachment portion that is to be placed between the foil walls, having a first sealing wall that faces towards the first foil wall to be sealed there against and a second sealing wall that faces towards the second foil wall to be sealed there against. The sealing walls are made of heat-sealable plastic material which allows for sealing against the foil walls. Heat-sealing is commonly done by a heat-sealing device which comprise first and second sealing jaws which clamp a respective foil wall onto a sealing wall and provide heat to seal the foil wall to the sealing wall.

It is desired to manufacture pouches of a mono-materials in order to improve recyclability. This holds that the foil walls and the spout are made of generally the same plastic material, for example polyethylene material (PE), such as high-density polyethylene (HDPE) and/or low-density polyethylene (LDPE). Such mono-material pouches must, for example, be free of a metallic layer. A drawback thereof is that such a metallic layer practically provides for strength of the foil walls during heat-sealing.

The mono-material pouches may therefore have a reduced strength compared to more conventional pouches with foil walls which include a metallic layer. This brings along that heat throughput through the foil walls, which takes place during heat-sealing of the sealing walls against the foil walls, must be reduced to avoid undue weakening of the foil walls at the elevated heat-sealing temperature. A possible way of achieving this is to preheat the attachment portion of the spout, so that less heat is required which is fed to be fed through the foil walls during sealing.

An example of spout preheating is disclosed in EP 3 943 279 B1, in which spouts are supplied and arranged with their attachment portions between the front ends of hot air supply nozzles to raise the temperature thereof. After preheating, the spouts are grasped by their necks and positioned in between the foil walls by means of a spout inserting device, after which the attachment portion of the spout is heat-sealed to the foil walls by the jaws of the heat-sealing device.

This known way of preheating spouts has the drawback that the preheating cannot be controlled in a desired manner. For example, fluctuations in the air flow rate, temperature of the air, swirling of the air and external influences may all have an undue influence on the preheating. In turn, inaccuracies in the preheating of the spouts may result in sealing flaws due to heat inputs that are either too high or too low to achieve an appropriate seal.

It is an object of the present invention to provide for a method and production machine for production collapsible pouches with an improved, or at least alternative, preheating of plastic spouts.

According to a first aspect, the present invention provides a method for the production of collapsible pouches as claimed in claim 1, of which the preamble is based on EP 3 943 279 B1.

The pouches each comprise an opposed first foil wall and second foil wall, e.g. first pouch wall and second pouch wall, each comprising heat-sealable film material. These foil walls may be made of the same film material and are adapted to be sealed against each other and against a plastic spout of the pouch.

The foils walls may be made of a plastic material, for example polyethylene material (PE), such as high-density polyethylene (HDPE) and/or low-density polyethylene (LDPE). Preferably, the foil walls are made of metal-free heat-sealable film material. Such mono-materials may be more convenient to recycle.

The pouches manufactured with the present method comprise a plastic spout with an attachment portion having a first sealing wall and an opposed second sealing wall. The sealing walls may be straight sealing walls, or may be curved or angled, for example each comprising two concavely curved sections and one convex curved section in between.

The sealing walls of the attachment portion are made from heat-sealable plastic material. This plastic material may be the same material as the heat-sealable film material from which the foil walls of the pouch are made. For example, the sealing walls may be made of a polyethylene material (PE), such as high-density polyethylene (HDPE) and/or low-density polyethylene (LDPE).

The sealing walls each have a corresponding shape to define a perimeter of the attachment portion. The overall perimeter of the attachment portion is thereby formed by the first sealing wall and the second sealing wall in combination.

The first sealing wall has an outer surface configured to be sealed to the first foil wall at least partly and the second sealing wall having an outer surface configured to be sealed to the second foil wall at least partly. For example, a central part of the foil walls is configured to be sealed against the respective sealing wall of the spout, whereas side portions of the foil walls are configured to be sealed against each other.

It is to be understood that the present invention is applicable to the sealing of spouts of spouts in between foil walls or pouch walls of pre-made pouches, i.e. where pouches are sealed prior to the sealing of the spouts, or in between foil walls, e.g. folded foil walls, where the pouch seals, e.g. side seals and/or bottom gusset seals, have not yet been made.

In the present method, use is made of a pouch production machine comprising a spout preheating device, a heat-sealing device distinct from the spout preheating device, and a spout inserting device. The spout preheating device and the heat-sealing device are distinct from each other, which implies that preheating of the spout is done at a location different from the sealing of the spout in between the foil walls, requiring the spout to be moved by means of the spout inserting device in between the preheating and sealing positions.

The spout preheating device comprises a first preheating member configured to face the first sealing wall and a second preheating member configured to face the second sealing wall. Compared to the known preheating device working with a flow of heated air, the present spout preheating device comprises the first preheating member with a first heating element for emitting heat towards the first sealing wall and the second preheating member with a second heating element for emitting heat towards the second sealing wall.

It is to be understood that the present invention enables preheating of the spouts in the absence of significant preheating by convection. It was that convective heating, for example by means of a the heated air flow known from prior art, is inaccurate as the homogeneity of the heating cannot be safeguarded. Both radiation heating and conductive heating may allow for improved controllability of the heat flow towards the spout during preheating, thereby enabling more accurate preheating.

When carrying out the method, the temperature of these heating elements is raised in order to accurately control the transfer of heat towards the sealing walls of the attachment portion. This may increase the controllability of the temperature of the sealing walls during preheating, in particular when compared to the inaccurate heating with an air flow known from prior art.

During preheating of the sealing walls, the preheating members may be in contact with the respective sealing walls or they may be spaced at uniform distances from the respective sealing walls, in particular in a manner that the heating elements of the preheating members are spaced at a distance.

Furthermore, the first preheating member, for example the first heating element thereof, has a contoured front face of which a shape corresponds to the shape of the first sealing wall. Likewise, the second preheating member, for example the second heating element thereof, has a contoured front face of which a shape corresponds to the shape of the second sealing wall.

The respective contoured front faces may typically be heated, each being configured to generate heat, which heat is transferred to the sealing walls of the attachment portion. It may alternatively be envisaged to rely on indirect preheating of the sealing walls, where the preheating members themselves are not heated, but where heat is generated in the sealing walls themselves, for example under influence of an electromagnetic field.

These corresponding shapes between the preheating members and the sealing walls may provide that a uniform distance between the preheating members and the sealing walls may be obtained over the entire sealing wall. The distance travelled by the heat from the preheating members towards the sealing walls is thus substantially constant along the entire surface of the sealing walls, so that heat losses between the preheating members and the sealing walls are substantially the same over the entire first and second sealing wall.

This may yield that the heat input during preheating of the sealing walls is more uniformly and allows for improved controllability, compared to the inaccurate and uneven heating with an air flow known from prior art.

The corresponding shapes between the contoured front faces of the heating elements and the sealing walls implies that the shapes may be the same, thus being complementary to each other. However, the shapes may also be similar, so that minor differences may exist between them. The sealing walls may for example have a rounded shape, whereas the shape of the contoured front faces of the heating elements can be straight and/or angled. As such, the distance between the contoured front faces and sealing walls may vary to a minor extent.

The method comprises the step of arranging the attachment portion of the spout in between opposed preheating members of the spout preheating device, wherein the first preheating member faces the first sealing wall and the second preheating member faces the second sealing wall. The first preheating member, for example the first heating element thereof, is thereby arranged at a uniform distance from the first sealing wall, i.e. over its entire contoured front face. Similarly, the second preheating member, for example the second heating element thereof, is thereby arranged at a uniform distance from the second sealing wall, i.e. over its entire contoured front face. This uniform distance may also be equal to zero, which applies for a situation where the contoured front faces of the preheating members are in contact with the respective sealing walls.

After arranging the spout in between opposed preheating members, the method comprises the step of preheating at least partially the outer surfaces of the first and second sealing wall by providing heat from the first and second preheating members towards the respective first and second sealing walls to a preheating temperature below the melting temperature of the plastic material of the first and second sealing walls.

The preheating temperature may be defined as the temperature reached inside the sealing walls. This means that the temperature in the preheating members may differ from the preheating temperature, for example being above the melting temperature of the sealing walls, as long as the preheating temperature in the sealing walls itself will remain below the melting temperature.

It is important to stay below the melting temperature of the sealing walls during preheating, since it not desired to melt the sealing in the spout preheating device. Such excessive heating could result in undesirable deforming of the sealing walls, leading to potential inadvertently geometric errors and poor eventual sealing between the foil walls of the pouch and the sealing walls.

Furthermore, the heat input into the sealing walls may become too large in case of such excessive heating. Hence, wall thicknesses of the sealing wall may typically be much larger than that of the foil wall, which implies that a large degree of residual heat may remain present in the sealing walls after preheating, which could result in instable behaviour of the foil walls upon sealing of the spout in between them.

The method further comprises the step of positioning, with the spout inserting device, the preheated spout with the preheated first and second sealing walls in a non-bonded region between the opposed first and second foil walls, e.g. in between the opposed pouch walls. The spout inserting device may be operated to position the spout after preheating, but may alternatively position the spout even during preheating, whereby the preheating members of the spout preheating device are moved along with the spout inserting device during at least part of the spout's path towards the position in between the foil walls.

The spout inserting device may be configured to grip the spout at the spout preheating device, after which it may move, for example displace and/or rotate, the spout towards the heat-sealing device, where it is positioned in between the foil walls. The clamping of the spout with the spout inserting device may be released as soon as the foil walls and the attachment portion are clamped in between sealing jaws of the heat-sealing device. Subsequently, the spout inserting device may be moved back to the spout preheating device to clamp a subsequent spout.

Finally, the method comprises the step of heat-sealing the first foil wall to the outer surface of the first sealing wall and the second foil wall to the outer surface of the second sealing wall using the heat-sealing device. The heat-sealing device comprises a first sealing jaw, for heating the first foil wall, and a second sealing jaw, for heating the second foil wall.

The heat-sealing comprises clamping the first foil wall onto the preheated first sealing wall with the first sealing jaw and clamping the second foil wall onto the preheated second sealing wall with the second sealing jaw, wherein the heat-sealing device is operated to provide heat from both the first and second sealing jaws so as to heat seal the first and second foil walls to the first and second sealing walls.

The heat-sealing of the first foil wall to the outer surface of the first sealing wall and the second foil wall to the outer surface of the second sealing wall may be carried out in a manner similar to the disclosure of WO 2021/018915 A1, of which the disclosure is entirely incorporated herein by reference.

In embodiments, the heating of the heated contoured front faces of the first and second heating elements may be varied over the front faces, for example in cases where minor differences exist between the shapes of the front faces and of the heating elements. For example, side portions of the front faces may be controlled to be heated to a different, e.g. higher, temperature than central portions thereof. As such, compensation may be provided for differences in heat loss between the side portions and the central portions that could follow from different local distances between the front faces and the sealing walls.

In embodiments, at least during the preheating step, the contoured front faces of the first and second heating elements only project over part of the outer surfaces of the first and second sealing walls. The facing of part of the sealing walls may still provide for sufficient preheating of the sealing walls of the attachment portion.

The heating elements may for example face a central part of the sealing walls extending over the entire width of the sealing walls, whilst not extending over the entire height of the sealing walls. As such, the preheating may be obtained over the entire width of the sealing walls, thus allowing for improved sealing over the entire width of the attachment portion as well.

In further embodiments, a heating period during which the heating elements are heated and/or a pause duration after preheating and prior to sealing may be selected such, that accumulated heat in the preheated portion of the sealing walls may be conducted away from the preheated portion by means of heat conduction in order to homogenize the preheating of the sealing walls.

In embodiments, the heating elements only overlap with part of the outer surfaces of the sealing walls. However, heat emitted from these heating elements may spread wider, for example as radiant heat, convective heat and/or conductive heat. This may allow relatively narrow heating elements to preheat relatively large parts of the sealing walls.

In embodiments, the first and second preheating member comprise at least one respective first and second side portion adjoining the first and second heating elements, and wherein, at least during the preheating step, the first and second side portions and the first and second heating elements face towards the first and second sealing wall.

The heating elements are thereby surrounded on one or both sides. These side portions are not heated when the heating elements are heated. Instead, they serve for projecting over parts of the sealing walls that are not faced by the heating elements.

In embodiments, the first and second side portion may respectively contact the first and second sealing walls of the attachment portion of the spout during preheating, i.e. when the heating elements are heated. Meanwhile, the heating elements may, but not need to, be cleared away from the sealing walls during preheating. The contact between the non-heated side portions and the sealing walls may thereby ensure an accurate and reproducible spacing between the heating elements and the outer surface of the sealing walls.

In embodiments, the spout preheating device comprises an actuator device configured and operated to move the first and second preheating members relative to each other between an opened position, in which the first and second preheating members are cleared away from the first and second sealing walls, and a preheating position, in which the first and second preheating members are closely spaced from, or in contact with, the first and second sealing walls.

The actuator device serves to adjust a spacing between the preheating members prior to and after preheating. During preheating, it is generally to have a narrow spacing between the preheating members and the sealing wall, or optionally to have contact between them. This corresponds to the preheating position, in which a uniform distance between the heating element and the sealing wall may be in the range between 0.5 mm and 1.0 mm or in which the heating elements may be in contact with the sealing walls.

After preheating, the preheated spout may be removed from the space between the preheating members. Especially when the spout is to be removed to the side, the actuator device enables the preheating members to be moved away from each other, to increase the width of the space between the preheating members. This position is referred to as the opened position, due to the relatively large spacing between the preheating members.

In embodiments, at least part of the preheating step is carried out simultaneously with the positioning step. This may be enabled by moving the first and second preheating members along with the spout during at least part of the trajectory towards the pouch, as initiated by movement with the spout inserting device. This may avoid the need for separate preheating and positioning steps, leading to a reduction in the time needed between preheating and sealing, thus avoiding undesired cooling of the preheated spout.

The preheating members may be integrated with the spout inserting device, so that the spout inserting device effects the movement of the preheating members during positioning.

In embodiments, the first heating element is a first radiant heating element for emitting radiant heat from the contoured face, e.g. the heated contoured face towards the first sealing wall, and the second heating element is a second radiant heating element for emitting radiant from the contoured face, e.g. the heated contoured face heat towards the second sealing wall.

These radiant heating elements are able to transfer heat in the absence of contact between the heating elements and the sealing walls and do not need to rely on conductive of heat through an intermediate medium, such as a flow of air. Instead, these radiant heating elements mainly emit electromagnetic radiation travelling from the heating elements to the sealing walls directly, as a result of being heated to certain temperature level. The electromagnetic radiation will travel directly from the radiant heating elements to the sealing walls, which may be in the absence of convective and/or conductive heat transfer via any foreign medium, such as ambient air, in between the heating elements and the sealing walls. As such, radiant preheating may allow for heat transfer at an improved efficiency.

In embodiments, the first radiant heating element is an infrared heating element. Alternatively or additionally, the second radiant heating element is an infrared heating element. The infrared heating elements emit infrared radiant heat at a wavelength in the range between approximately 780 nm and 1 mm. Such infrared radiation is invisible for the human eye, but allows for an efficient transfer of heat from the infrared heating elements to the sealing walls.

In embodiments, the radiant heating elements may be so-called black body radiant heating elements, which may have a relatively high spectral radiance, which enables a relatively large of radiant heat to be emitted at a relatively low temperature of the heating element.

In embodiments, at least during the preheating step, the heated contoured front faces of the first and second radiant heating elements are each spaced at a distance from the first and second sealing walls. The preheating is thereby carried out in the absence of physical contact between the heating elements and the sealing wall. During preheating, a uniform distance between the heating elements and the sealing walls may be in the range between 0.5 mm and 1.0 mm.

The absence of contact between the heating elements and the sealing walls may avoid build-up of molten resin against the heating elements and therewith reduces contamination of the heating elements, which would otherwise deteriorate the preheating over time.

The absence of contact may further provide that the heating elements can be heated to temperature levels above the melting temperature of the sealing walls without giving rise to melting and collapse of the sealing walls. This may allow for more stable and robust preheating, as well as improved geometric stability of the sealing walls during preheating.

Finally, the absence of contact may also avoid mechanical forces acting against the sealing walls. This may lead to fewer deformations, e.g. elastic deformations as well as plastic deformations, thereby also improving the geometric stability of the sealing walls.

In embodiments, at least during the preheating step, the distance between the contoured front faces of the first and second preheating member and the first and second sealing wall is substantially constant over the outer surfaces of the first and second sealing walls. This constant distance may provide for an evenly spread heat flux from the preheating members towards the sealing walls, thus resulting in uniform preheating of the sealing walls.

The distance may be equal to zero over the outer surfaces of the sealing walls, implying that a uniform contact is present between the preheating members and the sealing walls. Alternatively, the distance may be any distance, preferably being in a similar order of magnitude as a thickness of the sealing walls. The distance between the preheating members and the sealing walls may, for example, be in the range between 0.1 mm and 5.0 mm, preferably between 0.2 mm and 2.0 mm, for example between 0.5 and 1.0 mm.

In embodiments, the first and second radiant heating elements, e.g. the heated contoured front faces thereof, are formed as elongate radiant heating strips that are adjoined by the first and second side portions on opposite sides, and the first and second radiant heating elements project, at least during the preheating step, only over part of the first and second sealing walls. These side portions may be embodied as respectively non-heated contoured front faces of the preheating members, of which the shapes correspond to the respective first and second sealing walls of the attachment portion of the spout.

These elongate strips are relatively narrow compared to a height of the sealing walls. The radiant heating elements may for example face a central part of the sealing walls extending over the entire width of the sealing walls, whilst not extending over the entire height of the sealing walls. As such, the preheating may be obtained over the entire width of the sealing walls, thus allowing for improved sealing over the entire width of the attachment portion as well.

The radiant heating elements may further provide that a certain degree of the radiant heat is emitted towards the sealing walls at a non-acute angle. Part of the radiant heat may thereby be emitted towards the opposed part, e.g. height, of the sealing walls over which the radiant heating elements project, whereas part of the radiant heat may be emitted at an angle, e.g. upward and/or downward, towards the portions, e.g. height, of the sealing walls that are not opposed by the radiant heating elements.

This may offer a further benefit, in that narrow radiant heating elements may still effect preheating of the sealing walls over a larger portion, e.g. height, of the sealing walls.

In embodiments, the first and second side portions project forward relative to the first and second radiant heating element, seen in a direction towards the first and second sealing walls. These first and second side portions adjoin the heating elements, e.g. the radiant heating elements of the preheating members on opposite sides. The forward projecting thereof implies that, during preheating, a distance between the sealing walls and the first and second side portions is smaller that the distance, e.g. constant distance, between the sealing walls and the heating elements.

According to this embodiment, the side portions project in front of the heating elements and may shield the heating elements at the side, for example allowing heat emitted from the heating elements to be converged towards the sealing walls, instead of having a widespread heat flux.

In embodiments, at least during the preheating step, the first and second preheating members, e.g. the first and second side portions thereof, are positioned against the first and second sealing walls. The side portions may thereby contact the sealing walls, preferably at a relatively low contact pressure to prevent substantial deformations from occurring in the sealing walls. The contact of the side portions, preferably in combination with the side portions projecting in front of the heating elements, may enable accurate spacing of the heating elements from the sealing walls during preheating. This may contribute in maintaining a desired distance between the sealing walls and the heating elements, e.g. in maintaining a desired constant distance between the sealing walls and the radiant heating elements.

In embodiments, the first heating element is a first contact heating element for contacting the first sealing wall and for transferring conductive heat from the heated contoured front face towards the first sealing wall, and the second heating element is a second contact heating element for contacting the second sealing wall and for transferring conductive heat from the heated contoured front face towards the second sealing wall.

According to these embodiments, the preheating of the sealing walls may rely on conductive heat transfer from the contact heating elements towards the sealing walls. The contact heating elements may be configured to be clamped against the sealing walls at a relatively low contact pressure to prevent the sealing walls from deforming substantially.

In embodiments, an electric current is fed through the first and second heating elements during preheating, therewith generating the heat, e.g. an impulse of heat. The heating elements according to this embodiment are electric heating elements, configured to convert electric energy into thermal energy.

The electric heating element may be resistive heating elements, configured to generate heat as a result of heating under influence of electrical resistance. Alternatively or additionally, the electric energy may be converted into electromagnetic radiation being emitted by the heating elements.

The heat may be generated by the heating elements as a heat impulse, i.e. having a relatively short duration and relatively high temperature. Alternatively, the heating elements may be heated substantially continuously when the method is carried out.

In embodiments, the preheating involves an impulse preheating cycle in which an impulse of heat is emitted to the first and second sealing walls from the first and second heating elements, after which the impulse of heat is terminated.

Such impulses of heat imply that the heating element is heated intermittently and that it is allowed to cool down in between heat impulse upon exchange of heat with the ambient air surrounding the preheating device. This may of a benefit that the duration of the preheating of the sealing walls can be controlled accurately and that excessive preheating, e.g. melting, of the sealing walls can be avoided substantially.

In embodiments, the electric current is fed through the first and second heating elements temporarily, after which the electric current is terminated. As such, the electric current is fed intermittently, allowing impulses of heat to be generated, instead of having constant heating of the preheating members.

In embodiments, the spout inserting device is further associated with the first and second preheating members, and the spout inserting device moves the first and second preheating members together with the spout during at least part of the preheating step and the positioning step.

As such, the functionality of the spout inserting device and the preheating members may be combined, so that the first and second preheating members can be moved along with the spout during at least part of the trajectory towards the pouch, as initiated by movement with the spout inserting device. This may avoid the need for separate preheating and positioning steps, leading to a reduction in the time needed between preheating and sealing, thus avoiding undesired cooling of the preheated spout.

The preheating members may be integrated with the spout inserting device, so that the spout inserting device effects the movement of the preheating members during positioning. For example, the spout may be held in between the preheating members during preheating, for example being clamped gently in between the side portions of the sealing jaws, whilst the preheating members are moved towards the pouch in order to position the preheated spout in between the foil walls of the pouch.

In embodiments, the heat-sealing device is an impulse sealing device, comprising a high frequency electric current source and a cooling device configured to cool each of the first and second sealing jaws, wherein each of the first and second sealing jaws comprises a susceptor element and wherein each of the first and second sealing jaws comprises an inductor which is electrically insulated from the susceptor element and wherein the high frequency electric current source is connected to the inductor of each of the first and second sealing jaws, and the heat-sealing involves an impulse sealing cycle in which, during the clamping of the first and second foil walls onto the first and second sealing walls, the high frequency electric current source is operated to temporarily feed a high frequency electric current to the inductors, thereby generating a high frequency electromagnetic field inducing eddy currents in the susceptor elements generating an impulse of heat that is emitted by the susceptor elements, which impulse of heat seals the first and second foil walls to the first and second sealing walls, after which the cooling device is operated to assist cooling down of the first and second sealing jaws, at least the susceptor elements thereof, after termination of the feed of high frequency electric current.

In embodiments, the spout is made of a plastic mono-material, for example a polyolefin material, such as polyethylene (PE), for example high-density polyethylene (HDPE), or polypropylene (PP). These plastic mono-materials are typically utilized to improve recyclability, especially where the foil walls and the spout are made of the same plastic material.

In embodiments, the spout is made from the same heat-sealable material as the heat-sealable film material of the first and second foil walls, preferably a plastic mono-material, for example both consisting of a polyolefin material, for example polyethylene (PE). This holds that the foil walls and the spout are made of the same plastic material may improve recyclability of the pouch with its spout.

Preferably, these mono-material pouches are free of metallic element. The mono-material pouches may therefore have a reduced strength compared to conventional pouches that include a metallic, for example aluminium, layer in the foil walls. The present embodiment may be allowed, since the present preheating allows a heat throughput through the foil walls, during sealing of the sealing walls against the foil walls, to be reduced to avoid weakening of the foil walls at elevated sealing temperatures.

In embodiments, a preheating temperature obtained in the first and second sealing walls is in the range between 80°C and 150°C, preferably in the range between 100°C and 140°C, for example about 130°C. This preheating temperature may be defined as a maximum temperature level achieved in the sealing walls.

Accordingly, the preheating temperature in the sealing walls may differ from the temperature level of the heating elements during preheating. For example, the temperature level of the heating elements may be larger than the maximum temperature level achieved in the sealing walls, for example depending on the duration of the preheating step.

In embodiments, the preheating temperature is selected in relation to a melting temperature of the sealing walls. It has been explained already that the preheating temperature lies below the melting temperature of the sealing walls, in order to avoid melting and collapse thereof during preheating.

The difference between the melting temperature of the sealing walls and the preheating temperature may determine the degree of preheating, for example as a trade-off with the stability of the sealing walls against deformations at the elevated preheating temperature.

In embodiments, the preheating temperature is selected in a range between 10°C and 30°C below the melting temperature of the sealing walls. It has been found that preheating temperatures in this range may allow for desirable preheating, whilst not being too large to risk melting of the sealing walls.

In embodiments, at least during the preheating step, the temperature of the first and second heating elements, e.g. of the first and second radiant heating elements, in particular the heated contoured front faces thereof, is in the range between 100°C and 350°C, preferably in the range between 150°C and 250°C, for example about 200°C.

The temperature of the first and second heating elements, for example when embodied as contactless heating elements, such as radiant heating elements, may lie above the melting temperature of the sealing walls. The eventual preheating temperature in the sealing walls may rise during the preheating step, which implies that preheating of the sealing walls can be ended after a desired temperature has been reached, even when the heating elements themselves are at a higher temperature level.

According to a second aspect, the present invention provides a method for the production of collapsible pouches, wherein use is made of a pouch production machine comprising a spout preheating device, a heat-sealing device distinct from the spout preheating device and a spout inserting device,
wherein the pouches each comprise a first foil wall and an opposed second foil wall, each foil wall comprising heat-sealable film material, preferably metal-free heat-sealable film material, and wherein the pouches each have a plastic spout,
wherein the spout comprises an attachment portion having a first sealing wall and an opposed second sealing wall, the sealing walls each having a corresponding shape to define a perimeter of the attachment portion, each sealing wall being made from a heat-sealable plastic material having a melting temperature, the first sealing wall having an outer surface configured to be sealed to the first foil wall and the second sealing wall having an outer surface configured to be sealed to the second foil wall,
wherein the spout preheating device comprises a first preheating member configured to face the first sealing wall and an opposed second preheating member configured to face the second sealing wall,
wherein the heat-sealing device comprises a first sealing jaw and a second sealing jaw, and
wherein the method comprises the steps of:
   - arranging the attachment portion of the spout in between opposed first and second preheating members of the spout preheating device, wherein the first preheating member faces the first sealing wall and the second preheating member faces the second sealing wall,
   - preheating at least partially the outer surfaces of the first and second sealing walls by providing heat from the first and second preheating members towards the respective first and second sealing walls to a preheating temperature, which is below the melting temperature of the plastic material of the first and second sealing walls,
   - positioning, with the spout inserting device, the preheated spout with the preheated first and second sealing walls in a non-bonded region between the opposed first and second foil walls,
   - heat-sealing the first foil wall to the outer surface of the first sealing wall and the second foil wall to the outer surface of the second sealing wall using the heat-sealing device, wherein the first foil wall is clamped onto the preheated first sealing wall by means of the first sealing jaw and the second foil wall is clamped onto the preheated second sealing wall by means of the second sealing jaw, wherein the heat-sealing device is operated to provide heat from both the first and second sealing jaws so as to heat seal the first and second foil walls to the first and second sealing walls.

According to the second aspect, the first preheating member comprises a first radiant heating element for emitting radiant heat from the heated contoured face towards the first sealing wall, wherein the second preheating member comprises a second radiant heating element for emitting radiant heat from the heated contoured face towards the second sealing wall, and wherein, at least during the preheating step, the first and second radiant heating elements are spaced at a distance from the first and second sealing walls.

These radiant heating elements are able to transfer heat in the absence of contact between the heating elements and the sealing walls and do not need to rely on conductive of heat through an intermediate medium, such as a flow of air. Instead, these radiant heating elements mainly emit electromagnetic radiation travelling from the heating elements to the sealing walls directly, as a result of being heated to certain temperature level. The electromagnetic radiation will travel directly from the radiant heating elements to the sealing walls, which may be in the absence of convective and/or conductive heat transfer via any foreign medium, such as ambient air, in between the heating elements and the sealing walls. As such, radiant preheating may allow for heat transfer at an improved efficiency.

The method according to the second aspect of the invention may include one or more of the features and/or benefits disclosed herein in relation to the method according to the first aspect of the invention, in particular as recited in the claims.

In embodiments, the radiant heating of the heated contoured front faces of the first and second radiant heating elements may be varied over the front faces, for example in cases where minor differences exist between the shapes of the front faces and of the radiant heating elements. For example, side portions of the front faces may be controlled to be heated to a different, e.g. higher, temperature than central portions thereof. As such, compensation may be provided for differences in heat loss between the side portions and the central portions that could follow from different local distances between the front faces and the sealing walls.

In embodiments, the first radiant heating element is an infrared heating element. Alternatively or additionally, the second radiant heating element is an infrared heating element. The infrared heating elements emit infrared radiant heat at a wavelength in the range between approximately 780 nm and 1 mm. Such infrared radiation is invisible for the human eye, but allows for an efficient transfer of heat from the infrared heating elements to the sealing walls.

According to a third aspect, the present invention provides
a method for the production of collapsible pouches, wherein use is made of a pouch production machine comprising a spout preheating device, a heat-sealing device distinct from the spout preheating device and a spout inserting device,
wherein the pouches each comprise a first foil wall and an opposed second foil wall, each foil wall comprising heat-sealable film material, preferably metal-free heat-sealable film material, and wherein the pouches each have a plastic spout,
wherein the spout comprises an attachment portion having a first sealing wall and an opposed second sealing wall, the sealing walls each having a corresponding shape to define a perimeter of the attachment portion, each sealing wall being made from a heat-sealable plastic material having a melting temperature, the first sealing wall having an outer surface configured to be sealed to the first foil wall and the second sealing wall having an outer surface configured to be sealed to the second foil wall,
wherein the spout preheating device comprises a first preheating member configured to face the first sealing wall and an opposed second preheating member configured to face the second sealing wall,
wherein the heat-sealing device comprises a first sealing jaw and a second sealing jaw, and
wherein the method comprises the steps of:
   - arranging the attachment portion of the spout in between opposed first and second preheating members of the spout preheating device, wherein the first preheating member faces the first sealing wall and the second preheating member faces the second sealing wall,
   - preheating at least partially the outer surfaces of the first and second sealing walls by providing heat from the first and second preheating members towards the respective first and second sealing walls to a preheating temperature, which is below the melting temperature of the plastic material of the first and second sealing walls,
   - positioning, with the spout inserting device, the preheated spout with the preheated first and second sealing walls in a non-bonded region between the opposed first and second foil walls,
   - heat-sealing the first foil wall to the outer surface of the first sealing wall and the second foil wall to the outer surface of the second sealing wall using the heat-sealing device, wherein the first foil wall is clamped onto the preheated first sealing wall by means of the first sealing jaw and the second foil wall is clamped onto the preheated second sealing wall by means of the second sealing jaw, wherein the heat-sealing device is operated to provide heat from both the first and second sealing jaws so as to heat seal the first and second foil walls to the first and second sealing walls.

According to the third aspect, the spout preheating device comprises an actuator device configured and operated to move the first and second preheating members relative to each other between an opened position, in which the first and second preheating members are cleared away from the first and second sealing walls, and a preheating position, in which the first and second preheating members are closely spaced from, or in contact with, the first and second sealing walls.

The actuator device serves to adjust a spacing between the preheating members prior to and after preheating. During preheating, it is generally to have a narrow spacing between the preheating members and the sealing wall, or optionally to have contact between them. This corresponds to the preheating position, in which a uniform distance between the heating element and the sealing wall may be in the range between 0.5 mm and 1.0 mm or in which the heating elements may be in contact with the sealing walls.

After preheating, the preheated spout may be removed from the space between the preheating members. Especially when the spout is to be removed to the side, the actuator device enables the preheating members to be moved away from each other, to increase the width of the space between the preheating members. This position is referred to as the opened position, due to the relatively large spacing between the preheating members.

The method according to the third aspect of the invention may include one or more of the features and/or benefits disclosed herein in relation to the method according to the first and/or second aspect of the invention, in particular as recited in the claims.

In embodiments, the heating of the contoured front faces of the first and second heating elements may be varied over the front faces, for example in cases where minor differences exist between the shapes of the front faces and of the heating elements. For example, side portions of the front faces may be controlled to be heated to a different, e.g. higher, temperature than central portions thereof. As such, compensation may be provided for differences in heat loss between the side portions and the central portions that could follow from different local distances between the front faces and the sealing walls.

In embodiments, at least part of the preheating step is carried out simultaneously with the positioning step. This may be enabled by moving the first and second preheating members along with the spout during at least part of the trajectory towards the pouch, as initiated by movement with the spout inserting device. This may avoid the need for separate preheating and positioning steps, leading to a reduction in the time needed between preheating and sealing, thus avoiding undesired cooling of the preheated spout.

The preheating members may be integrated with the spout inserting device, so that the spout inserting device effects the movement of the preheating members during positioning.

According to a fourth aspect, the present invention provides a production machine for the production of collapsible pouches as claimed in claim 1, of which the preamble is based on EP 3 943 279 B1.

The pouches each comprise an opposed first foil wall and second foil wall each comprising heat-sealable film material. These foil walls may be made of the same film material and are adapted to be sealed against each other and against a plastic spout of the pouch.

The foils walls may be made of a plastic material, for example polyethylene material (PE), such as high-density polyethylene (HDPE) and/or low-density polyethylene (LDPE). Preferably, the foil walls are made of metal-free heat-sealable film material. Such mono-materials may be more convenient to recycle.

The pouches that can be manufactured with the present production machine comprise a plastic spout with an attachment portion having a first sealing wall and an opposed second sealing wall. The sealing walls may be straight sealing walls, or may be curved or angled, for example each comprising two concavely curved sections and one convex curved section in between.

The sealing walls of the attachment portion are made from heat-sealable plastic material. This plastic material may be the same material as the heat-sealable film material from which the foil walls of the pouch are made. For example, the sealing walls may be made of a polyethylene material (PE), such as high-density polyethylene (HDPE) and/or low-density polyethylene (LDPE).

The sealing walls each have a corresponding shape to define a perimeter of the attachment portion. The overall perimeter of the attachment portion is thereby formed by the first sealing wall and the second sealing wall in combination.

The first sealing wall has an outer surface configured to be sealed to the first foil wall at least partly and the second sealing wall having an outer surface configured to be sealed to the second foil wall at least partly. For example, a central part of the foil walls is configured to be sealed against the respective sealing wall of the spout, whereas side portions of the foil walls are configured to be sealed against each other.

It is to be understood that the present invention is applicable to the sealing of spouts of spouts in between foil walls of pre-made pouches, i.e. where pouches are sealed prior to the sealing of the spouts, or in between foil walls, e.g. folded foil walls, where the pouch seals, e.g. side seals and/or bottom gusset seals, have not yet been made.

The pouch production machine comprises a spout preheating device, a heat-sealing device distinct from the spout preheating device and a spout inserting device. The spout preheating device and the heat-sealing device are distinct from each other, which implies that preheating of the spout is done at a location different from the sealing of the spout in between the foil walls, requiring the spout to be moved by means of the spout inserting device in between the preheating and sealing positions.

The spout preheating device comprises a first preheating member configured to face the first sealing wall and a second preheating member configured to face the second sealing wall. Compared to the known preheating device working with a flow of heated air, the present spout preheating device comprises the first preheating member with a first heating element for emitting heat towards the first sealing wall and the second preheating member with a second heating element for emitting heat towards the second sealing wall.

It is to be understood that the present invention enables preheating of the spouts in the absence of significant preheating by convection. It was that convective heating, for example by means of a the heated air flow known from prior art, is inaccurate as the homogeneity of the heating cannot be safeguarded. Both radiation heating and conductive heating may allow for improved controllability of the heat flow towards the spout during preheating, thereby enabling more accurate preheating

During preheating with the spout preheating device, the temperature of the heating elements is raised in order to accurately control the transfer of heat towards the sealing walls of the attachment portion. This may increase the controllability of the temperature of the sealing walls during preheating, in particular when compared to the inaccurate heating with an air flow known from prior art.

During preheating of the sealing walls, the preheating members may be in contact with the respective sealing walls or they may be spaced at uniform distances from the respective sealing walls, in particular in a manner that the heating elements of the preheating members are spaced at a distance.

Furthermore, the first preheating member, for example the first heating element thereof, has a contoured front face of which a shape corresponds to the shape of the first sealing wall. Likewise, the second preheating member, for example the second heating element thereof, has a contoured front face of which a shape corresponds to the shape of the second sealing wall.

The respective contoured front faces may typically be configured to generate heat, which heat is transferred to the sealing walls of the attachment portion.. It may alternatively be envisaged to rely on indirect preheating of the sealing walls, where the preheating members themselves are not heated, but where heat is generated in the sealing walls themselves, for example under influence of an electromagnetic field.

These corresponding shapes between the preheating members and the sealing walls may provide that a uniform distance between the preheating members and the sealing walls may be obtained over the entire sealing wall. The distance travelled by the heat from the preheating members towards the sealing walls is thus substantially constant along the entire surface of the sealing walls, so that heat losses between the preheating members and the sealing walls are substantially the same over the entire first and second sealing wall.

This may yield that the heat input during preheating of the sealing walls is more uniformly and allows for improved controllability, compared to the inaccurate and uneven heating with an air flow known from prior art.

The corresponding shapes between the contoured front faces of the heating elements and the sealing walls implies that the shapes may be the same, thus being complementary to each other. However, the shapes may also be similar, so that minor differences may exist between them. The sealing walls may for example have a rounded shape, whereas the shape of the contoured front faces of the heating elements can be angled. As such, the distance between the contoured front faces and sealing walls may vary to a minor extent.

In operation, the pouch production machine may be configured to arrange the attachment portion of the spout in between opposed preheating members of the spout preheating device, wherein the first preheating member faces the first sealing wall and the second preheating member faces the second sealing wall. The first preheating member, for example the first heating element thereof, is thereby arranged at a uniform distance from the first sealing wall, i.e. over its entire contoured front face. Similarly, the second preheating member, for example the second heating element thereof, is thereby arranged at a uniform distance from the second sealing wall, i.e. over its entire contoured front face. This uniform distance may also be equal to zero, which applies for a situation where the contoured front faces of the preheating members are in contact with the respective sealing walls.

The pouch production machine is configured to preheat the outer surfaces of the first and second sealing wall at least partially by providing heat from the first and second preheating members towards the respective first and second sealing walls to a preheating temperature below the melting temperature of the plastic material of the first and second sealing walls.

The preheating temperature may be defined as the temperature reached inside the sealing walls. This means that the temperature in the preheating members may differ from the preheating temperature, for example being above the melting temperature of the sealing walls, as long as the preheating temperature in the sealing walls itself will remain below the melting temperature.

It is important to stay below the melting temperature of the sealing walls during preheating, since it not desired to melt the sealing in the spout preheating device. Such excessive heating could result in undesirable deforming of the sealing walls, leading to potential inadvertently geometric errors and poor eventual sealing between the foil walls of the pouch and the sealing walls.

Furthermore, the heat input into the sealing walls may become too large in case of such excessive heating. Hence, wall thicknesses of the sealing wall may typically be much larger than that of the foil wall, which implies that a large degree of residual heat may remain present in the sealing walls after preheating, which could result in instable behaviour of the foil walls upon sealing of the spout in between them.

The pouch production machine is further configured to position, with the spout inserting device, the preheated spout with the preheated first and second sealing walls in a non-bonded region between the opposed first and second foil walls. The spout inserting device may be operated to position the spout after preheating, but may alternatively position the spout even during preheating, whereby the preheating members of the spout preheating device are moved along with the spout inserting device during at least part of the spout's path towards the position in between the foil walls.

The spout inserting device may be configured to grip the spout at the spout preheating device, after which it may move, for example displace and/or rotate, the spout towards the heat-sealing device, where it is positioned in between the foil walls. The clamping of the spout with the spout inserting device may be released as soon as the foil walls and the attachment portion are clamped in between sealing jaws of the heat-sealing device. Subsequently, the spout inserting device may be moved back to the spout preheating device to clamp a subsequent spout.

Finally, the pouch production machine is configured to heat seal the first foil wall to the outer surface of the first sealing wall and the second foil wall to the outer surface of the second sealing wall using the heat-sealing device. The heat-sealing device comprises a first sealing jaw, for heating the first foil wall, and a second sealing jaw, for heating the second foil wall.

The heat-sealing comprises clamping the first foil wall onto the preheated first sealing wall with the first sealing jaw and clamping the second foil wall onto the preheated second sealing wall with the second sealing jaw, wherein the heat-sealing device is operated to provide heat from both the first and second sealing jaws so as to heat seal the first and second foil walls to the first and second sealing walls.

The heat-sealing of the first foil wall to the outer surface of the first sealing wall and the second foil wall to the outer surface of the second sealing wall may be carried out in a manner similar to the disclosure of WO 2021/018915 A1, of which the disclosure is entirely incorporated herein by reference.

In embodiments, the heating of the contoured front faces of the first and second heating elements may be varied over the front faces, for example in cases where minor differences exist between the shapes of the front faces and of the heating elements. For example, side portions of the front faces may be controlled to be heated to a different, e.g. higher, temperature than central portions thereof. As such, compensation may be provided for differences in heat loss between the side portions and the central portions that could follow from different local distances between the front faces and the sealing walls.

In embodiments, the spout preheating device comprises an actuator device configured and operated to move the first and second preheating members relative to each other between an opened position, in which the first and second preheating members are cleared away from the first and second sealing walls, and a preheating position, in which the first and second preheating members are closely spaced from, or in contact with, the first and second sealing walls.

The actuator device serves to adjust a spacing between the preheating members prior to and after preheating. During preheating, it is generally to have a narrow spacing between the preheating members and the sealing wall, or optionally to have contact between them. This corresponds to the preheating position, in which a uniform distance between the heating element and the sealing wall may be in the range between 0.5 mm and 1.0 mm or in which the heating elements may be in contact with the sealing walls.

After preheating, the preheated spout may be removed from the space between the preheating members. Especially when the spout is to be removed to the side, the actuator device enables the preheating members to be moved away from each other, to increase the width of the space between the preheating members. This position is referred to as the opened position, due to the relatively large spacing between the preheating members.

In embodiments, the spout preheating device is configured to the preheat the first and second sealing walls at least partly simultaneously with the positioning by the spout inserting device. This may be enabled when the spout inserting device is configured to move the first and second preheating members along with the spout during at least part of the trajectory towards the pouch, as initiated by movement with the spout inserting device. This may avoid the need for separate preheating and positioning steps, leading to a reduction in the time needed between preheating and sealing, thus avoiding undesired cooling of the preheated spout.

The preheating members may be integrated with the spout inserting device, so that the spout inserting device effects the movement of the preheating members during positioning.

In embodiments, the first preheating member comprises a first radiant heating element for emitting radiant heat from the contoured face, e.g. the heated contoured face towards the first sealing wall, and wherein the second preheating member comprises a second radiant heating element for emitting radiant heat from the contoured face, e.g. the heated contoured face towards the second sealing wall.

These radiant heating elements are able to transfer heat in the absence of contact between the heating elements and the sealing walls and do not need to rely on conductive of heat through an intermediate medium, such as a flow of air. Instead, these radiant heating elements mainly emit electromagnetic radiation travelling from the heating elements to the sealing walls directly, as a result of being heated to certain temperature level. The electromagnetic radiation will travel directly from the radiant heating elements to the sealing walls, which may be in the absence of convective and/or conductive heat transfer via any foreign medium, such as ambient air, in between the heating elements and the sealing walls. As such, radiant preheating may allow for heat transfer at an improved efficiency.

In embodiments, the first radiant heating element is an infrared heating element. Alternatively or additionally, the second radiant heating element is an infrared heating element. The infrared heating elements are configured to emit infrared radiant heat at a wavelength in the range between approximately 780 nm and 1 mm. Such infrared radiation is invisible for the human eye, but allows for an efficient transfer of heat from the infrared heating elements to the sealing walls.

In embodiments, the radiant heating elements may be so-called black body radiant heating elements, which may have a relatively high spectral radiance, which enables a relatively large of radiant heat to be emitted at a relatively low temperature of the heating element.

In embodiments, the spout preheating device is configured such, that the heated contoured front faces of the first and second radiant heating elements are each spaced at a distance from the first and second sealing walls when the first and second sealing walls are preheated. The spout preheating device is thereby configured to carry out preheating in the absence of physical contact between the heating elements and the sealing walls. During preheating, a uniform distance between the heating elements and the sealing walls may be in the range between 0.5 mm and 1.0 mm.

The absence of contact between the heating elements and the sealing walls may avoid build-up of molten resin against the heating elements and therewith reduces contamination of the heating elements, which would otherwise deteriorate the preheating over time.

The absence of contact may further provide that the heating elements can be heated to temperature levels above the melting temperature of the sealing walls without giving rise to melting and collapse of the sealing walls. This may allow for more stable and robust preheating, as well as improved geometric stability of the sealing walls during preheating.

Finally, the absence of contact may also avoid mechanical forces acting against the sealing walls. This may lead to fewer deformations, e.g. elastic deformations as well as plastic deformations, thereby also improving the geometric stability of the sealing walls.

In embodiments, the distance between the contoured front faces of the first and second preheating member and the first and second sealing wall is substantially constant over the outer surfaces of the first and second sealing walls when the first and second sealing walls are preheated. This constant distance may provide for an evenly spread heat flux from the preheating members towards the sealing walls, thus resulting in uniform preheating of the sealing walls.

The distance may be equal to zero over the outer surfaces of the sealing walls, implying that a uniform contact is present between the preheating members and the sealing walls. Alternatively, the distance may be any distance, preferably being in a similar order of magnitude as a thickness of the sealing walls. The distance between the preheating members and the sealing walls may, for example, be in the range between 0.1 mm and 5.0 mm, preferably between 0.2 mm and 2.0 mm, for example between 0.5 and 1.0 mm.

In embodiments, the first heating element is a first contact heating element for contacting the first sealing wall and for transferring conductive heat from the heated contoured front face towards the first sealing wall, and the second heating element is a second contact heating element for contacting the second sealing wall and for transferring conductive heat from the heated contoured front face towards the second sealing wall.

According to these embodiments, the preheating of the sealing walls may rely on conductive heat transfer from the contact heating elements towards the sealing walls. The contact heating elements may be configured to be clamped against the sealing walls at a relatively low contact pressure to prevent the sealing walls from deforming substantially.

In embodiments, the first and second heating elements only project over part of the outer surfaces of the first and second sealing walls when the first and second sealing walls are preheated. The facing of part of the sealing walls may still provide for sufficient preheating of the sealing walls of the attachment portion.

During preheating, the heating elements may for example face a central part of the sealing walls extending over the entire width of the sealing walls, whilst not extending over the entire height of the sealing walls. As such, the preheating may be obtained over the entire width of the sealing walls, thus allowing for improved sealing over the entire width of the attachment portion as well.

In embodiments, the first and second preheating member comprise at least one respective first and second side portion adjoining the first and second heating elements, and, at least when the first and second sealing walls are preheated, the first and second side portions and the first and second heating elements face towards the first and second sealing wall.

The heating elements are thereby surrounded on one or both sides. These side portions are not heated when the heating elements are heated. Instead, they serve for projecting over parts of the sealing walls that are not faced by the heating elements.

The side portions may be embodied as respectively non-heated contoured front faces of the preheating members, of which the shapes correspond to the respective first and second sealing walls of the attachment portion of the spout.

In embodiments, the first and second side portion may respectively contact the first and second sealing walls of the attachment portion of the spout during preheating, i.e. when the heating elements are heated. Meanwhile, the heating elements may, but not need to, be cleared away from the sealing walls during preheating. The contact between the non-heated side portions and the sealing walls may thereby ensure an accurate and reproducible spacing between the heating elements and the outer surface of the sealing walls.

In embodiments, the first and second side portions project forward relative to the first and second heating element, seen in a direction towards the first and second sealing walls. The forward projecting thereof implies that, during preheating, a distance between the sealing walls and the first and second side portions is smaller that the distance, e.g. constant distance, between the sealing walls and the heating elements.

According to this embodiment, the side portions project in front of the heating elements and may shield the heating elements at the side, for example allowing heat emitted from the heating elements to be converged towards the sealing walls, instead of having a widespread heat flux.

In embodiments, the first and second preheating members, e.g. the first and second side portions thereof, are configured to be positioned against the first and second sealing walls when the first and second sealing walls are preheated. The side portions may thereby be configured to contact the sealing walls, preferably at a relatively low contact pressure to prevent substantial deformations from occurring in the sealing walls. The contact of the side portions, preferably in combination with the side portions projecting in front of the heating elements, may enable accurate spacing of the heating elements from the sealing walls during preheating. This may contribute in maintaining a desired distance between the sealing walls and the heating elements, e.g. in maintaining a desired constant distance between the sealing walls and the radiant heating elements.

In embodiments, the first and second heating elements, e.g. the heated contoured front faces thereof, are formed as elongate radiant heating strips that are adjoined by the first and second side portions on opposite sides, and the first and second radiant heating elements project, at least when the first and second sealing walls are preheated, only over part of the first and second sealing walls. These side portions may be embodied as respectively non-heated contoured front faces of the preheating members, of which the shapes correspond to the respective first and second sealing walls of the attachment portion of the spout

These elongate strips are relatively narrow compared to a height of the sealing walls. The radiant heating elements may for example face a central part of the sealing walls extending over the entire width of the sealing walls, whilst not extending over the entire height of the sealing walls. As such, the preheating may be obtained over the entire width of the sealing walls, thus allowing for improved sealing over the entire width of the attachment portion as well.

The radiant heating elements may further provide that a certain degree of the radiant heat is emitted towards the sealing walls at a non-acute angle. Part of the radiant heat may thereby be emitted towards the opposed part, e.g. height, of the sealing walls over which the radiant heating elements project, whereas part of the radiant heat may be emitted at an angle, e.g. upward and/or downward, towards the portions, e.g. height, of the sealing walls that are not opposed by the radiant heating elements.

This may offer a further benefit, in that narrow radiant heating elements may still effect preheating of the sealing walls over a larger portion, e.g. height, of the sealing walls.

In embodiments, the spout preheating device is configured to feed an electric current is fed through the first and second heating elements to generating the heat, e.g. an impulse of heat. The heating elements according to this embodiment are electric heating elements, configured to convert electric energy into thermal energy.

The electric heating element may be resistive heating elements, configured to generate heat as a result of heating under influence of electrical resistance. Alternatively or additionally, the electric energy may be converted into electromagnetic radiation being emitted by the heating elements.

The heat may be generated by the heating elements as a heat impulse, i.e. having a relatively short duration and relatively high temperature. Alternatively, the heating elements may be heated substantially continuously when the method is carried out.

In embodiments, the spout preheating device is configured to perform an impulse preheating cycle in which it is configured to emit an impulse of heat to the first and second sealing walls from the first and second heating elements, after which it is configured to terminate the impulse of heat.

Such impulses of heat imply that the heating element is heated intermittently and that it is allowed to cool down in between heat impulse upon exchange of heat with the ambient air surrounding the preheating device. This may of a benefit that the duration of the preheating of the sealing walls can be controlled accurately and that excessive preheating, e.g. melting, of the sealing walls can be avoided substantially.

In embodiments, the spout preheating device is configured to feed the electric current through the first and second heating elements temporarily, after which it is configured to terminate the electric current. As such, the electric current is fed intermittently, allowing impulses of heat to be generated, instead of having constant heating of the preheating members.

In embodiments, the spout inserting device is further associated with the first and second preheating members, and wherein the spout inserting device is configured to move the first and second preheating members together with the spout.

As such, the functionality of the spout inserting device and the preheating members may be combined, so that the first and second preheating members can be moved along with the spout during at least part of the trajectory towards the pouch, as initiated by movement with the spout inserting device. This may avoid the need for separate preheating and positioning steps, leading to a reduction in the time needed between preheating and sealing, thus avoiding undesired cooling of the preheated spout.

The preheating members may be integrated with the spout inserting device, so that the spout inserting device effects the movement of the preheating members during positioning. For example, the spout may be held in between the preheating members during preheating, for example being clamped gently in between the side portions of the sealing jaws, whilst the preheating members are moved towards the pouch in order to position the preheated spout in between the foil walls of the pouch.

In embodiments, the pouch production machine further comprises a spout storage and a spout supply, configured to transport spouts from the spout storage towards the spout preheating device.

In embodiments, the heat-sealing device is an impulse sealing device, comprising a high frequency electric current source and a cooling device configured to cool each of the first and second sealing jaws, wherein each of the first and second sealing jaws comprises a susceptor element and wherein each of the first and second sealing jaws comprises an inductor which is electrically insulated from the susceptor element and wherein the high frequency electric current source is connected to the inductor of each of the first and second sealing jaws, and the heat-sealing involves an impulse sealing cycle in which, during the clamping of the first and second foil walls onto the first and second sealing walls, the high frequency electric current source is configured to be operated to temporarily feed a high frequency electric current to the inductors, thereby generating a high frequency electromagnetic field inducing eddy currents in the susceptor elements generating an impulse of heat that is emitted by the susceptor elements, which impulse of heat is configured to seal the first and second foil walls to the first and second sealing walls, after which the cooling device is configured to be operated to assist cooling down of the first and second sealing jaws, at least the susceptor elements thereof, after termination of the feed of high frequency electric current.

In embodiments, the spout preheating device is configured to obtain a preheating temperature in the first and second sealing walls in the range between 80°C and 150°C, preferably in the range between 100°C and 140°C, for example about 130°C. This preheating temperature may be defined as a maximum temperature level achieved in the sealing walls.

Accordingly, the preheating temperature in the sealing walls may differ from the temperature level of the heating elements during preheating. For example, the temperature level of the heating elements may be larger than the maximum temperature level achieved in the sealing walls, for example depending on the duration of the preheating step.

In embodiments, the preheating temperature is selected in relation to a melting temperature of the sealing walls. It has been explained already that the preheating temperature lies below the melting temperature of the sealing walls, in order to avoid melting and collapse thereof during preheating.

The difference between the melting temperature of the sealing walls and the preheating temperature may determine the degree of preheating, for example as a trade-off with the stability of the sealing walls against deformations at the elevated preheating temperature.

In embodiments, the spout preheating device is configured to heat the sealing walls to a preheating temperature in a range between 10°C and 30°C below the melting temperature of the sealing walls. It has been found that preheating temperatures in this range may allow for desirable preheating, whilst not being too large to risk melting of the sealing walls.

In embodiments, the spout preheating device is configured to heat the first and second heating elements, e.g. of the first and second radiant heating elements, in particular the heated contoured front faces thereof, to a temperature in the range between 100°C and 350°C, preferably in the range between 150°C and 250°C, for example about 200°C.

During preheating, the temperature of the first and second heating elements, for example when embodied as contactless heating elements, such as radiant heating elements, may lie above the melting temperature of the sealing walls. The eventual preheating temperature in the sealing walls may rise during the preheating step, which implies that preheating of the sealing walls can be ended after a desired temperature has been reached, even when the heating elements themselves are at a higher temperature level.

According to a fifth aspect the present invention provides a production machine for the production of collapsible pouches, the pouches each comprising a first foil wall and an opposed second foil wall, each foil wall comprising heat-sealable film material, preferably metal-free heat-sealable film material and wherein the pouches each have a plastic spout, and
the spout comprising an attachment portion having a first sealing wall and an opposed second sealing wall, the sealing walls each having a corresponding shape to define a perimeter of the attachment portion, each sealing wall being made from a heat-sealable plastic material having a melting temperature, the first sealing wall having an outer surface configured to be sealed to the first foil wall and the second sealing wall having an outer surface configured to be sealed to the second foil wall,
wherein the production machine comprises a spout preheating device, a heat-sealing device distinct from the spout preheating device and a spout inserting device,
wherein the spout preheating device comprises a first preheating member configured to face the first sealing wall and an opposed second preheating member configured to face the second sealing wall,
wherein the spout preheating device is configured to preheat at least partially the outer surfaces of the first sealing wall and the second sealing wall to a preheating temperature which is below the melting temperature of the plastic material of the first and second sealing walls by providing heat from the first and second preheating members towards the respective first and second sealing walls,
wherein the heat-sealing device comprises a first sealing jaw and a second sealing jaw,,
wherein the heat-sealing device is configured to heat seal the first foil wall to the outer surface of the first sealing wall and the second foil wall to the outer surface of the second sealing wall, wherein the heat-sealing comprises
clamping the first foil wall onto the preheated first sealing wall by means of the first sealing jaw and clamping the second foil wall onto the preheated second sealing wall by means of the second sealing jaw, wherein the heat-sealing device is operated to provide heat from both the first and second sealing jaws so as to heat seal the first and second foil walls onto the first and second sealing walls,
wherein the spout inserting device is configured to position the preheated spout with the preheated first and second sealing walls in a non-bonded region between the opposed first and second foil walls during the positioning step.

According to the fifth aspect, the first preheating member comprises a first radiant heating element for emitting radiant heat from the contoured face, e.g. the heated contoured face towards the first sealing wall, wherein the second preheating member comprises a second radiant heating element for emitting radiant heat from the contoured face, e.g. the heated contoured face towards the second sealing wall, and wherein, at least during the preheating, the first and second radiant heating elements are spaced at a distance from the first and second sealing walls.

These radiant heating elements are able to transfer heat in the absence of contact between the heating elements and the sealing walls and do not need to rely on conductive of heat through an intermediate medium, such as a flow of air. Instead, these radiant heating elements mainly emit electromagnetic radiation travelling from the heating elements to the sealing walls directly, as a result of being heated to certain temperature level. The electromagnetic radiation will travel directly from the radiant heating elements to the sealing walls, which may be in the absence of convective and/or conductive heat transfer via any foreign medium, such as ambient air, in between the heating elements and the sealing walls. As such, radiant preheating may allow for heat transfer at an improved efficiency.

The pouch production device according to the fifth aspect of the invention may include one or more of the features and/or benefits disclosed herein in relation to the pouch production device according to the fourth aspect of the invention, in particular as recited in the claims.

In embodiments, the radiant heating of the heated contoured front faces of the first and second radiant heating elements may be varied over the front faces, for example in cases where minor differences exist between the shapes of the front faces and of the heating elements. For example, side portions of the front faces may be controlled to be heated to a different, e.g. higher, temperature than central portions thereof. As such, compensation may be provided for differences in heat loss between the side portions and the central portions that could follow from different local distances between the front faces and the sealing walls.

In embodiments, the first radiant heating element is an infrared heating element. Alternatively or additionally, the second radiant heating element is an infrared heating element. The infrared heating elements are configured to emit infrared radiant heat at a wavelength in the range between approximately 780 nm and 1 mm. Such infrared radiation is invisible for the human eye, but allows for an efficient transfer of heat from the infrared heating elements to the sealing walls.

According to a sixth aspect the present invention provides
a production machine for the production of collapsible pouches, the pouches each comprising a first foil wall and an opposed second foil wall, each foil wall comprising heat-sealable film material, preferably metal-free heat-sealable film material and wherein the pouches each have a plastic spout, and
the spout comprising an attachment portion having a first sealing wall and an opposed second sealing wall, the sealing walls each having a corresponding shape to define a perimeter of the attachment portion, each sealing wall being made from a heat-sealable plastic material having a melting temperature, the first sealing wall having an outer surface configured to be sealed to the first foil wall and the second sealing wall having an outer surface configured to be sealed to the second foil wall,
wherein the production machine comprises a spout preheating device, a heat-sealing device distinct from the spout preheating device and a spout inserting device,
wherein the spout preheating device comprises a first preheating member configured to face the first sealing wall and an opposed second preheating member configured to face the second sealing wall,
wherein the spout preheating device is configured to preheat at least partially the outer surfaces of the first sealing wall and the second sealing wall to a preheating temperature which is below the melting temperature of the plastic material of the first and second sealing walls by providing heat from the first and second preheating members towards the respective first and second sealing walls,
wherein the heat-sealing device comprises a first sealing jaw and a second sealing jaw,,
wherein the heat-sealing device is configured to heat seal the first foil wall to the outer surface of the first sealing wall and the second foil wall to the outer surface of the second sealing wall, wherein the heat-sealing comprises
clamping the first foil wall onto the preheated first sealing wall by means of the first sealing jaw and clamping the second foil wall onto the preheated second sealing wall by means of the second sealing jaw, wherein the heat-sealing device is operated to provide heat from both the first and second sealing jaws so as to heat seal the first and second foil walls onto the first and second sealing walls,
wherein the spout inserting device is configured to position the preheated spout with the preheated first and second sealing walls in a non-bonded region between the opposed first and second foil walls during the positioning step.

According to the sixth aspect, the spout preheating device comprises an actuator device configured and operated to move the first and second preheating members relative to each other between an opened position, in which the first and second preheating members are cleared away from the first and second sealing walls, and a preheating position, in which the first and second preheating members are closely spaced from, or in contact with, the first and second sealing walls.

The actuator device serves to adjust a spacing between the preheating members prior to and after preheating. During preheating, it is generally to have a narrow spacing between the preheating members and the sealing wall, or optionally to have contact between them. This corresponds to the preheating position, in which a uniform distance between the heating element and the sealing wall may be in the range between 0.5 mm and 1.0 mm or in which the heating elements may be in contact with the sealing walls.

After preheating, the preheated spout may be removed from the space between the preheating members. Especially when the spout is to be removed to the side, the actuator device enables the preheating members to be moved away from each other, to increase the width of the space between the preheating members. This position is referred to as the opened position, due to the relatively large spacing between the preheating members.

The pouch production device according to the sixth aspect of the invention may include one or more of the features and/or benefits disclosed herein in relation to the pouch production device according to the fourth and/or fifth aspect of the invention, in particular as recited in the claims.

In embodiments, the heating of the contoured front faces of the first and second heating elements may be varied over the front faces, for example in cases where minor differences exist between the shapes of the front faces and of the heating elements. For example, side portions of the front faces may be controlled to be heated to a different, e.g. higher, temperature than central portions thereof. As such, compensation may be provided for differences in heat loss between the side portions and the central portions that could follow from different local distances between the front faces and the sealing walls.

In embodiments, the pouch production device is configured to carry out at least part of the preheating simultaneously with the positioning step. This may be enabled by moving the first and second preheating members along with the spout during at least part of the trajectory towards the pouch, as initiated by movement with the spout inserting device. This may avoid the need for separate preheating and positioning steps, leading to a reduction in the time needed between preheating and sealing, thus avoiding undesired cooling of the preheated spout.

The preheating members may be integrated with the spout inserting device, so that the spout inserting device effects the movement of the preheating members during positioning.

Further characteristics of the invention will be explained below, with reference to embodiments, which are displayed in the appended drawings, in which:
Figure 1 schematically shows a view of an embodiment of the pouch production according the invention,
Figure 2 shows an example of a spout to be joined between two opposed film material walls of a pouch,
Figure 3 shows a top portion of a pouch provided with the spout of figure 2,
Figure 4 shows a close-up view on a spout preheating device of an embodiment of the pouch production machine according to the invention,
Figure 5 shows a side view on the spout preheating device of figure 4,
Figure 6 shows a partially cut-open view on the spout preheating device of figure 4,
Figure 7 schematically shows a bottom view on a spout located in between preheating members of the spout preheating device of figure 4,
Figures 8a - 8c show various schematic embodiments of a preheating member, and
Figures 9a and 9b show two simulations of a preheated spout.

Throughout the figures, the same reference numerals are used to refer to corresponding components or to components that have a corresponding function.

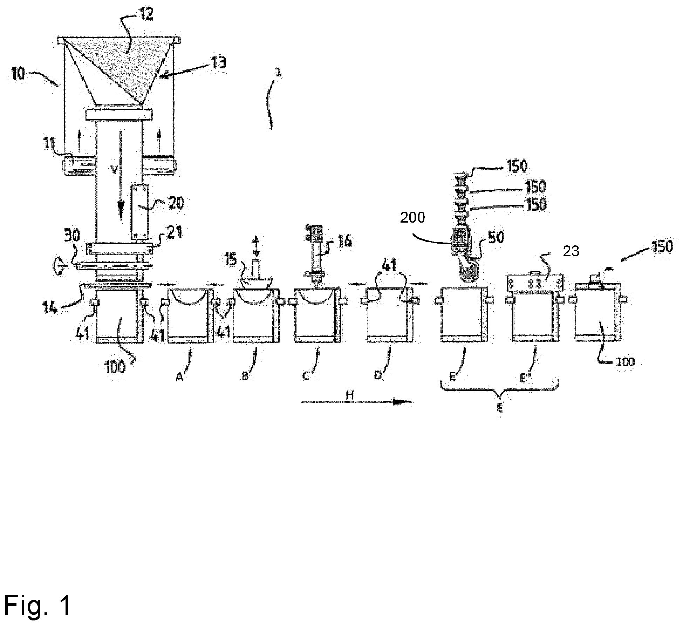

Figure 1 schematically depicts a pouch production machine and related operating method according to the invention for the production of collapsible pouches made from heat-sealable film material. Throughout the figures, the pouch production machine is referred to with reference numeral 1. The pouch production machine 1 is configured to produce collapsible pouches 100 comprising a plastic spout 150 or other fitment, e.g. standing collapsible pouches. The spout 150 is pre-made, e.g. by injection molding.

The pouch production machine 1 has a frame (not shown) provided with a film supply device 10 that is adapted to receive one or more rolls 11 of flexible heat-sealable film material 12. In the pouch production machine 1, the film material 12 is unwound from the roll 11.

The pouch production machine 1 comprises a folding device 13 to fold the film material 12 dispensed from a single roll into a folded shape. In the depicted exemplary embodiment, the folded film material 12 travels downward in a vertical direction (V). In another design the folded film material could travel horizontally. The folding device 13 is configured to fold the film material 12 such, that a fold-line is provided on one, here vertical, side of the folded film material 12. By means of the fold line, the film material 12 is formed into a first pouch wall 101 and an opposed second pouch wall 102, in order to define an interior of the pouch 100 in between them. In another embodiment the film material is folded into a gusset, e.g. to form a gusset bottom or a side gusset of the pouch.

After folding, the film material travels along a first heat sealing device 20. The first heat sealing device 20 is aligned parallel to the vertical direction (V) and is aligned with outer side seam regions of the folded film material 12, being located opposite to the fold line. The first heat sealing device 20 is configured to weld the vertical seam regions of the pouch walls 101, 102 that are located opposite to the fold line, such that the film material 12 attains a flattened tubular shape. Downstream of the first heat sealing device 20, here just below the device 20, the pouch production machine 1 comprises a second heat sealing device 21. The second heat sealing device 21 is aligned perpendicular to the vertical direction (V), e.g. parallel to a horizontal direction (H). The second heat sealing device 21 extends over the width of the folded film material 12 and is configured to weld a bottom seam of the pouches 100 to be made.

The pouch production machine 1 comprises a film conveyance device 30 configured to move the folded film material 12 in the direction (V) along the first heat sealing device 20 and subsequently along the second heat sealing device 21. A cutting device 14 is provided to separate a pouch 100 from the folded and partially sealed continuous film material 12 by making a horizontal cut over the width of the film material. The cut extends close to the bottom seal, so that the individualised pouch 100 has a non-bonded upper edge.

In the depicted embodiment, the film conveyance device 30 moves the folded film material in a stepwise manner along the stationary first and second heat sealing devices 20, 21. At the relevant position in front of the first heat sealing device 20, the film material 12 is held to form the first weld opposite to the fold line. Simultaneously, the film material 12 is held at a relevant location in front of the second heat sealing device 21 to form the second weld at the bottom of the pouch 100. In an embodiment one or more of the first heat sealing device 20 and the second heat sealing device 21 comprises a first jaw and a second jaw for heat sealing the material 12.

The production machine 1 is embodied with a horizontal conveyance mechanism that is configured to convey individual pouches 100 along a path of conveyance, wherein a sealing station E" as discussed herein as well as one or more other stations A, B, C, D, E' are arranged along this path of conveyance. The depicted conveyance mechanism is configured and operated to convey in an intermittent motion pattern, so stepwise. Often a so-called walking beam conveyance mechanism is employed for stepwise conveyance. The sealing action is then, concurrently with one or more other activities at one or more other stations of the machine 1, performed with the pouch 100 at rest.

The sealing station E" is mounted stationary in the machine 1, at least with regards to the direction of conveyance.

The mechanism, for example, is a walking beam mechanism having pairs of grippers 41 in a horizontal array. Herein each pair of grippers 41 is embodied to grip opposed side or corner regions of the pouch, with the open top directed upwards. The pair of grippers 41 is actuable in this example, allowing the spacing between the grippers 41 to be altered for opening and closing of the open top region of the pouch.

Below the cutting device 14 an individualized pouch 100 is gripped by a set of grippers 41. At station A of the machine 1, grippers 41 are moved towards one another, to open the top of the pouch 100, more specifically to open the non-bonded upper edge.

At station B, an opener 15 is introduced into the top of the pouch 100 to further open the non-bonded upper edge of the pouch 100.

Station C is a filling station, where a product, e.g. a liquid and/or solid product, is filled into the pouch 100 by a filling device 16 via the non-bonded upper edge.

At station D, the grippers 41 are moved away from one another, to somewhat close the non-bonded upper edge of the pouch 100 after the filling.

Station E is, at least in the present embodiment, a combined spout inserting station E' where a spout inserting device 50 is adapted to insert an attachment portion of a spout 150 in the non-bonded edge region, and a spout sealing station E".

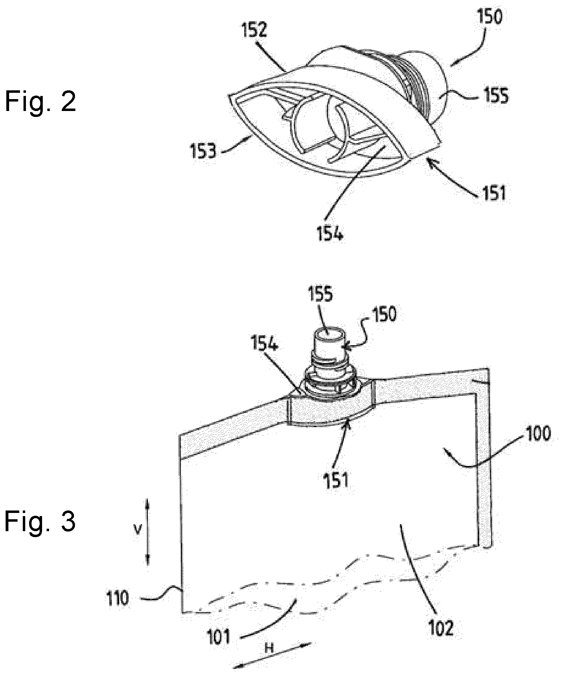

Before we address the spout sealing station E" we will first discuss the exemplary embodiment of the plastic spout 150 which is depicted in more detail in figures 2 and 3. The plastic spout 150 has an attachment portion 151 with thin sealing walls 152,153 that depend from a transverse wall 154 of the spout body. The spout 150 further comprises a tubular neck 155 extending upwards from the transverse wall 154 and forming a product passage for the dispensing of product from the pouch 100 via a mouth. The sealing walls 152, 153 may have a thickness of less than 2 mm in practical embodiments. Preferably, as shown, the sealing walls 152, 153 are smooth on their sealing faces.

Figure 3 depicts the situation wherein the spout 150 has been sealed in the upper edge region of the pouch 100 at station E". Herein the entire upper edge region has been sealed in one sealing cycle along with sealing the spout 150 to the pouch. Reference numerals 101 and 102 indicate the opposed first and second walls of the pouch 100.

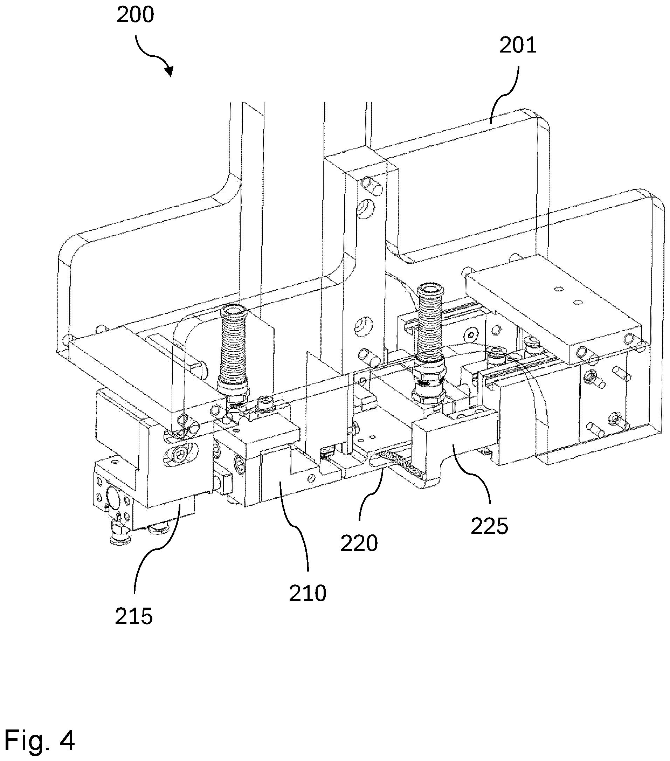

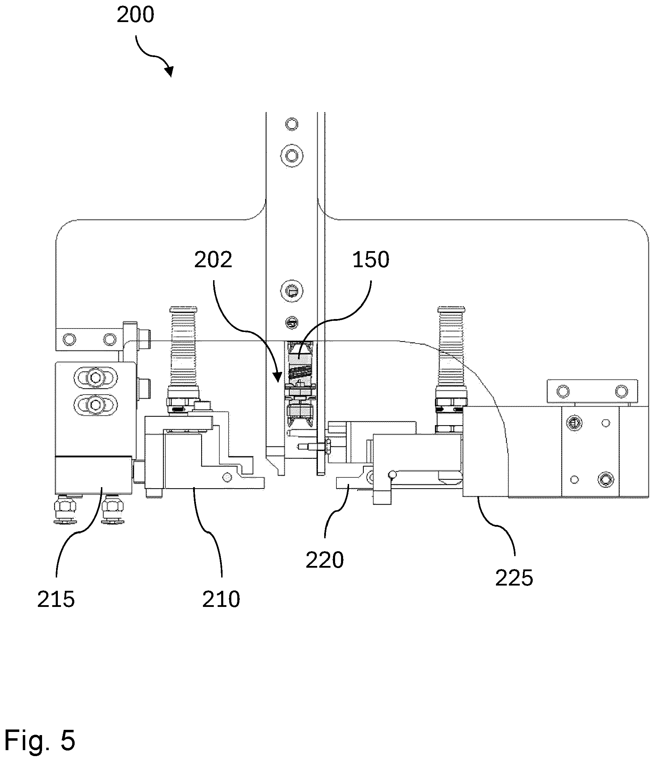

Figure 4 shows a close-up view on a spout preheating device 200 of the pouch production machine 1, comprising a frame member 201 and a spout supply 202 (Figure 5) in which the spouts 150 are supplied in order to be preheated.

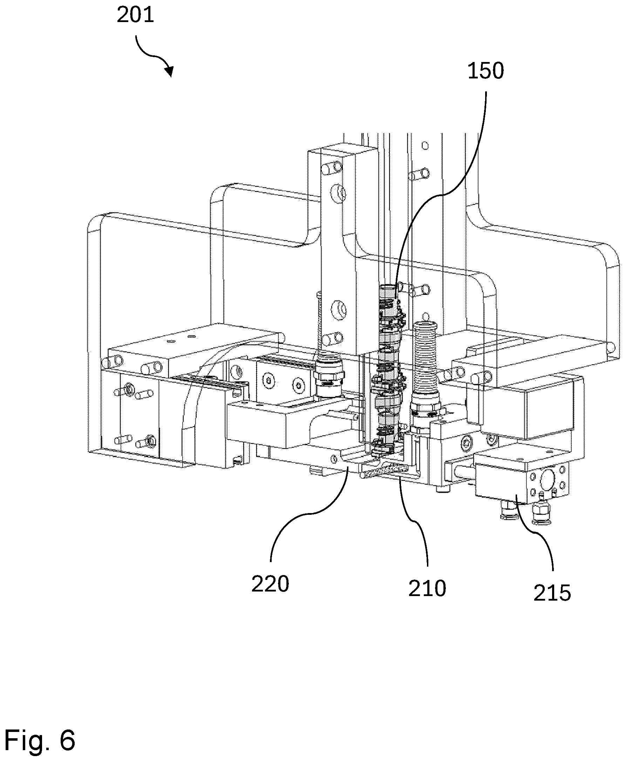

The spout preheating device 200 comprises a first preheating member 210 that is actuable by a first actuator device 215 and a second preheating member 220 that is actuable by second actuator device 225. In figures 4, 6 and 7, the preheating members 210, 220 are shown in their preheating position, in which the preheating members 210, 220 are closely spaced from the first and second sealing walls 152, 153. In figure 5, the preheating members 210, 220 have been moved away from each other into the opened position, in order to allow a spout 150 to be lowered in between the preheating members 210, 200 from the spout supply 202 above.

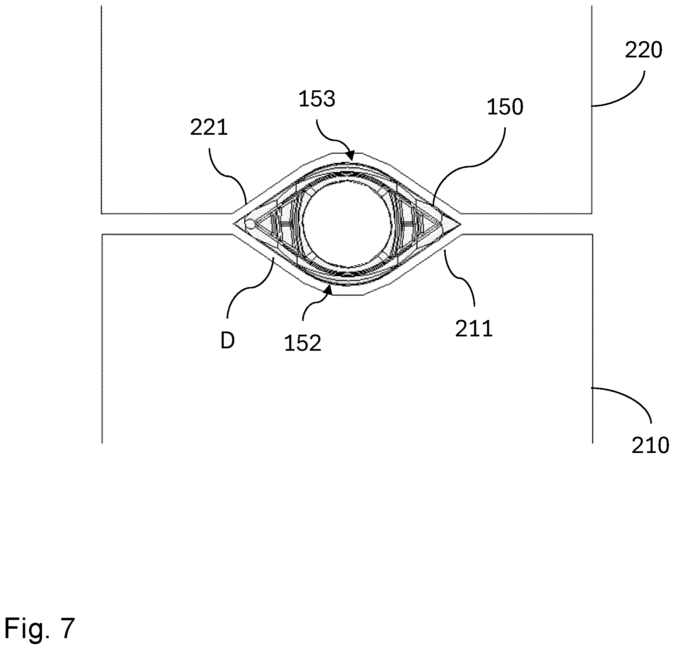

Figure 7 shows a bottom view on a spout 150 located in between preheating members 210, 220 of the spout preheating device 200. During preheating, the first preheating member 210 faces the first sealing wall 152 and the second preheating member 220 faces the second sealing wall 153. The first preheating member 210 has a first heating element 211 for emitting heat towards the first sealing wall 152 and the second preheating member 220 has a second heating element 221 for emitting heat towards the second sealing wall 153.

The first preheating member 210 has a heated contoured front face of which a shape corresponds to the shape of the first sealing wall 152. Likewise, the second preheating member 220 has a heated contoured front face of which a shape corresponds to the shape of the second sealing wall 153. These corresponding shapes between the preheating members 210, 220 and the sealing walls 152, 153 provides that a uniform distance D between the preheating members 210, 220 and the sealing walls 152, 153 is be obtained over the entire sealing wall. The distance travelled by the heat from the preheating members 210, 220 towards the sealing walls 152, 153 is thus substantially constant along the entire surface of the sealing walls 152, 153, so that heat losses between the preheating members 210, 220 and the sealing walls 152, 153 are substantially the same over the entire first and second sealing wall 152, 153.

The first heating element is a first radiant heating element 211 for emitting radiant heat towards the first sealing wall 152 and the second heating element is a second radiant heating element 221 for emitting radiant heat towards the second sealing wall 153. These radiant heating elements 211, 221 are able to transfer heat in the absence of contact between the heating elements 211, 221 and the sealing walls 152, 153. Instead, these radiant heating elements 211, 221 mainly emit electromagnetic radiation travelling from the heating elements 211, 221 to the sealing walls 152, 153 directly, as a result of being heated to certain temperature level.

In the present embodiment, the first radiant heating element 211 is an infrared heating element and the second radiant heating element 221 is an infrared heating element, configured to emit infrared radiant heat at a wavelength in the range between approximately 780 nm and 1 mm.

During preheating, the first and second radiant heating elements 211, 221 are spaced at the distance D from the first and second sealing walls 152, 153. The preheating is thereby carried out in the absence of physical contact between the heating elements 211, 221 and the sealing walls 152, 153. In the present embodiment, the uniform distance between the heating elements 211, 221 and the sealing walls 152, 153 lies in the range between 0.5 mm and 1.0 mm.

Furthermore, the distance between the first and second preheating member 210, 220 and the first and second sealing wall 152, 153 is substantially constant over the outer surfaces of the first and second sealing walls 152, 153. This constant distance provides for an evenly spread heat flux from the preheating members 210, 220 towards the sealing walls 152, 153, thus resulting in uniform preheating of the sealing walls 152, 153.

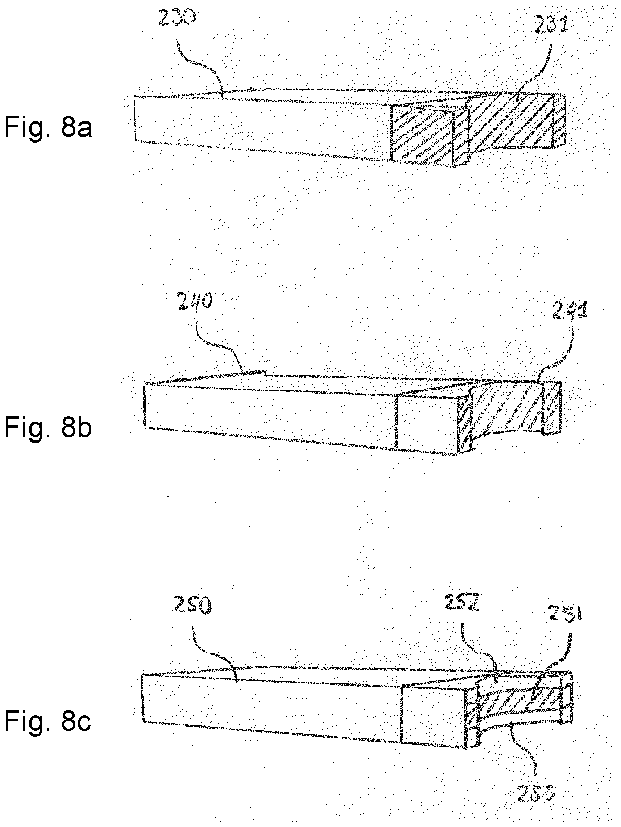

Figures 8a - 8c show various schematic embodiments of a preheating member. Figure 8a shows a preheating member 230 of which an entire front part forms the heating element 231 of which the temperature is raised during preheating. In figure 8b, an alternative preheating member 240 is shown, of which the front face forms the heating element 241.

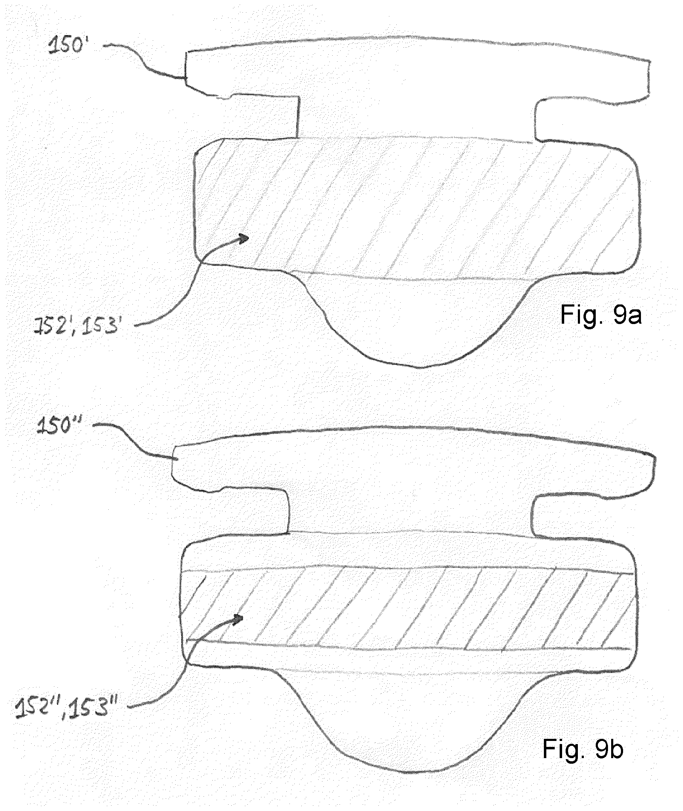

Figure 8c shows a further alternative embodiment of the preheating member 250, which comprises a heating element 251 that is relatively narrow compared to the overall front surface of the preheating member 250 and compared to the dimension of the sealing wall of the spout 150, as will be shown in figure 9b.

This heating element 251 only overlaps with part of the outer surfaces of the sealing walls and the preheating member 250 further comprises a first side portion 252 and a second side portion 253 adjoining the heating element 251. The first and second side portions 252, 253 are configured to face towards the sealing walls of the spout 150.

The heating element 251 is thereby adjoined on both sides with the side portions 252, 253, which are not heated when the heating element 251 is heated.

Optionally, the first and second side portion 252, 253 may respectively contact the first and second sealing walls 152, 153 of the spout 150 during preheating, i.e. when the heating element 251 is heated. Meanwhile, the heating element 251 can be cleared away from the sealing walls 152, 153 during preheating. The contact between the non-heated side portions 252, 253 and the sealing walls 152, 153 may thereby ensure an accurate and reproducible spacing between the heating element 251 and the sealing walls 152, 153.

Figures 9a and 9b show two simulations of a preheated spout 150. In figure 9a, the spout 150' is shown when preheated with a preheating member 230, 240 as shown in figure 8a or 8b. The preheating may obtain that the entire sealing walls 152', 153' are preheated, i.e. over the entire height and width.

In figure 9b, the preheated spout 150" is modelled, when preheated with the preheating member 250 shown in figure 8c, i.e. where the first radiant heating element 251 is formed as an elongate radiant heating strip that is adjoined by the first and second side portion 252, 253 on opposite sides and where the radiant heating element 251 projects, at least during the preheating step, only over part of the first and second sealing walls 152", 153".

As a result, as shown in figure 9b, such preheating may yield that the sealing walls 152", 153" are preheated over their entire width, i.e. from left to right in figure 9b, but only over part of their height.

## Claims

**1.** Method for the production of collapsible pouches (100), wherein use is made of a pouch production machine (1) comprising a spout preheating device (200), a heat-sealing device (23) distinct from the spout preheating device, and a spout inserting device (50),
wherein the pouches (100) each comprise a first pouch wall (101) and an opposed second pouch wall (102), each pouch wall comprising heat-sealable film material, preferably metal-free heat-sealable film material, and wherein the pouches each have a plastic spout (150),
wherein the spout (150) comprises an attachment portion (151) having a first sealing wall (152) and an opposed second sealing wall (153), the sealing walls each having a corresponding shape to define a perimeter of the attachment portion, each sealing wall being made from a heat-sealable plastic material having a melting temperature, the first sealing wall having an outer surface configured to be sealed to the first pouch wall and the second sealing wall having an outer surface configured to be sealed to the second pouch wall,
wherein the spout preheating device comprises a first preheating member (210, 230, 240, 250) configured to face the first sealing wall and an opposed second preheating member (220) configured to face the second sealing wall,
wherein the heat-sealing device comprises a first sealing jaw and a second sealing jaw, and
wherein the method comprises the steps of:
- arranging the attachment portion of the spout in between opposed first and second preheating members of the spout preheating device, wherein the first preheating member faces the first sealing wall and the second preheating member faces the second sealing wall,
- preheating at least partially the outer surfaces of the first and second sealing walls by providing heat from the first and second preheating members towards the respective first and second sealing walls to a preheating temperature which is below the melting temperature of the plastic material of the first and second sealing walls,
- positioning, with the spout inserting device, the preheated spout with the preheated first and second sealing walls in a non-bonded region between the opposed first and second pouch walls,
- heat-sealing the first pouch wall to the outer surface of the first sealing wall and the second pouch wall to the outer surface of the second sealing wall using the heat-sealing device, wherein the first pouch wall is clamped onto the preheated first sealing wall by means of the first sealing jaw and the second pouch wall is clamped onto the preheated second sealing wall by means of the second sealing jaw, wherein the heat-sealing device is operated to provide heat from both the first and second sealing jaws so as to heat seal the first and second pouch walls to the first and second sealing walls,
**characterized in that** the first preheating member comprises a first heating element (211, 231, 241, 251) which has a contoured front face, e.g. a heated contoured front face of which a shape corresponds to the shape of the first sealing wall,
**in that** the second preheating member comprises a second heating element (221) which has a contoured front face, e.g. a heated contoured front face of which a shape corresponds to the shape of the second sealing wall
**in that** the first heating element and the second heating elements each generate and transmit heat from the contoured front face thereof to at least a part of the first and second sealing wall respectively.

**2.** Method according to claim 1, wherein, at least during the preheating step, the contoured front faces of the first and second heating elements only project over part of the outer surfaces of the first and second sealing walls.

**3.** Method according to claim 1 or 2, wherein the spout preheating device comprises an actuator device (215, 225) configured and operated to move the first and second preheating members relative to each other between an opened position, in which the first and second preheating members are cleared away from the first and second sealing walls, and a preheating position, in which the first and second preheating members are closely spaced from, or in contact with, the first and second sealing walls.

**4.** Method according to any of the preceding claims 1-3, wherein the first heating element is a first radiant heating element for emitting radiant heat from the contoured front face towards the first sealing wall, and wherein the second heating element is a second radiant heating element for emitting radiant heat from the contoured front face towards the second sealing wall.

**5.** Method according to claim 4, wherein, at least during the preheating step, the contoured front faces of the first and second radiant heating elements are each spaced at a distance (D) from the first and second sealing walls.

**6.** Method according to claim 5, wherein, at least during the preheating step, the distance between the contoured front faces of the first and second preheating members and the first and second sealing wall is substantially constant over the outer surfaces of the first and second sealing walls.

**7.** Method according to any of the preceding claims 1-3, wherein the first heating element is a first contact heating element configured and operated for contacting the first sealing wall with the contoured front face and for transferring conductive heat towards the first sealing wall, and wherein the second heating element is a second contact heating element configured and operated for contacting the second sealing wall with the contoured front surface and for transferring conductive heat towards the second sealing wall.

**8.** Method according to any of the preceding claims 1-7, wherein, during preheating, an electric current is fed through the first and second heating elements, therewith generating the heat, e.g. an impulse of heat.

**10.** A production machine for the production of collapsible pouches, the pouches each comprising a first pouch wall and an opposed second pouch wall, each pouch wall comprising heat-sealable film material, preferably metal-free heat-sealable film material, and wherein the pouches each have a plastic spout, and
the spout comprising an attachment portion having a first sealing wall and an opposed second sealing wall, the sealing walls each having a corresponding shape to define a perimeter of the attachment portion, each sealing wall being made from a heat-sealable plastic material having a melting temperature, the first sealing wall having an outer surface configured to be sealed to the first pouch wall and the second sealing wall having an outer surface configured to be sealed to the second pouch wall,
wherein the production machine comprises a spout preheating device, a heat-sealing device distinct from the spout preheating device and a spout inserting device,
wherein the spout preheating device comprises a first preheating member configured to face the first sealing wall and an opposed second preheating member configured to face the second sealing wall,
wherein the spout preheating device is configured to preheat at least partially the outer surfaces of the first sealing wall and the second sealing wall to a preheating temperature which is below the melting temperature of the plastic material of the first and second sealing walls by providing heat from the first and second preheating members towards the respective first and second sealing walls,
wherein the spout inserting device is configured to position the preheated spout with the preheated first and second sealing walls in a non-bonded region between the opposed first and second pouch walls during the positioning step,
wherein the heat-sealing device comprises a first sealing jaw and a second sealing jaw,
wherein the heat-sealing device is configured to heat seal the first pouch wall to the outer surface of the first sealing wall and the second pouch wall to the outer surface of the second sealing wall, wherein the heat-sealing comprises
clamping the first pouch wall onto the preheated first sealing wall by means of the first sealing jaw and clamping the second pouch wall onto the preheated second sealing wall by means of the second sealing jaw, wherein the heat-sealing device is operated to provide heat from both the first and second sealing jaws so as to heat seal the first and second pouch walls onto the first and second sealing walls,
**characterized in that** the first preheating member comprises a first heating element which has a contoured front face, e.g. a heated contoured front face of which a shape corresponds to the shape of the first sealing wall,
**in that** the second preheating member comprises a second heating element which has a contoured front face, e.g. a heated contoured front face of which a shape corresponds to the shape of the second sealing wall, and
**in that** the first heating element and the second heating element are each configured to generate and transmit heat from the contoured front face thereof to at least a part of the first and second sealing wall respectively.

**11.** Pouch production machine according to claim 10, wherein the spout preheating device comprises an actuator device configured and operated to move the first and second preheating members relative to each other between an opened position, in which the first and second preheating members are cleared away from the first and second sealing walls, and a preheating position, in which the first and second preheating members are closely spaced from, or in contact with, the first and second sealing walls.

**12.** Pouch production machine according to claim 10 or 11, wherein the first and second preheating member each comprise at least one respective first and second side portion adjoining the first and second heating elements, and wherein, at least when the first and second sealing walls are preheated, the first and second side portions and the first and second heating elements face towards the first and second sealing wall.

**13.** Pouch production machine according to claim 12, wherein the first and second side portions project forward relative to the first and second heating element, seen in a direction towards the first and second sealing walls.

**14.** Pouch production machine according to claim 12 or 13, wherein the first and second heating elements are formed as elongate radiant heating strips that are adjoined by the first and second side portions on opposite sides, and wherein the first and second radiant heating elements project, at least when the first and second sealing walls are preheated, only over part of the first and second sealing walls.
